# EUROPEAN PATENT APPLICATION

(11) **EP 2 012 271 A2**
(43) Date of publication of application: **07.01.2009**
(21) Application number: 08159350.1
(22) Date of filing: 30.06.2008
(51) Int. Cl.: G06T 3/40, B60R 1/00

(54) **Image processing system and method**

(30) Priority: 02.07.2007 JP 2007174208
(71) Applicant: Nissan Motor Co., Ltd., Kanagawa 221-0023 (JP)
(72) Inventor: Kanaoka, Akihiro, Atsugi-shi Kanagawa 243-0123 (JP); Sakai, Kazuhiko, Atsugi-shi Kanagawa 243-0123 (JP); Sugawara, Daisuke, Atsugi-shi Kanagawa 243-0123 (JP); Otani, Sotaro, Atsugi-shi Kanagawa 243-0123 (JP)
(74) Representative: Holmes, Matthew William

(57) **Abstract**

An image processing system for a vehicle including a plurality of image pickup devices directed toward different predetermined areas around the vehicle to provide captured images and a display unit. Subject areas are extracted from the captured images, wherein the subject areas correspond to partial areas of predetermined areas captured by the image pickup devices that are adjacent to the image pickup devices. Brightness values of the subject areas are equalized to provide processed images, and the processed image are combined to generate a display image.

## Description

The present invention relates to an image processing system and method and particularly, but not exclusively, to an apparatus and method that combines images captured with a plurality of cameras to generate a single continuous display image. Aspects of the invention relate to an apparatus, to a system, to a method and to a vehicle.

Image processing systems where a plurality of images are captured by a plurality of vehicle mounted cameras, and the captured images are combined to generate a single display image are known. The single display image is displayed on, for example, a display screen used for navigation. However, the captured images may have different average luminance values in accordance with the mounting positions, directions and characteristics of the vehicle mounted cameras. Thus, if the captured images are combined without adjustment, the resulting display image may be unsatisfactory.

Japanese Unexamined Patent Application Publication No. 2007-72750 describes a system that captures a plurality of images with a plurality of vehicle mounted cameras having an automatic gain control (AGC) function. The luminance values of the captured images are temporarily compressed, luminance values of an overlapping portion of two adjacent captured are shifted to reduce the difference between the luminance values of the overlapping portions, the luminance values of the captured images are decompressed within a luminance value range between pure white and pure black, and the resulting images are combined.

In the above-described system, the brightness values of the captured images are automatically controlled by the AGC function of the vehicle mounted cameras. However, differences in the magnitude of luminance level correction provided by the individual vehicle mounted cameras may increase the required magnitude of luminance value correction. Furthermore, temporarily compressed luminance values may not be sufficiently decompressed after the correction, resulting in the display image being partially blurred. In contrast, embodiments of the invention are capable of providing good continuity of a display image, thereby generating a satisfactory display image without any visibly discomforting areas in the entire image.

It is an aim of the present invention to address this issue. Embodiments of the invention may provide a downward image display system that captures front, rear, left, and right images using four vehicle-mounted cameras. The captured images may be converted into downward images that correspond to a virtual view point located above a vehicle, and the downward images are combined to be displayed as a single continuous downward display image. Other embodiments of the invention may provide an image processing apparatus having such a downward image display system. However, the invention is not limited to these uses and may be applied to any type of an image processing apparatus that combines images captured with a plurality of cameras to generate a single continuous display image. Other aims and advantages of the invention will become apparent from the following description, claims and drawings.

Aspects of the invention therefore provide an apparatus, a system, a method and a vehicle as claimed in the appended claims.

According to another aspect of the invention for which protection is sought there is provided an image processing system for a vehicle including a plurality of image pickup devices directed to different predetermined areas around the vehicle to provide captured images of the predetermined areas and a display unit, the image processing system comprising an extracting unit configured to extract subject areas from the captured images wherein the subject areas correspond to partial areas of the predetermined areas that are adjacent to the image pickup devices, an image processing unit including a brightness controlling unit configured to equalize brightness values of the subject areas to provide processed images, a display image generating unit configured to combine the processed images to generate a display image.

In an embodiment, the display image generating unit is configured to convert the processed images into downward images corresponding to a downward view from a virtual view point located above the vehicle and to combine the downward images. The system may comprise a plurality of image pickup devices, each of the plurality of image pickup devices having an image pickup element and a lens disposed in front of the image pickup element. The image processing unit may comprise a first correcting unit configured to perform a first image correction for each of the subject areas in accordance with a luminance curve of a corresponding lens.

In an embodiment, the first correcting unit is configured to reduce a difference between a luminance value of a portion of a subject area that corresponds to a lens center portion of the corresponding lens and a luminance value of a portion of the subject area that corresponds to a lens edge portion of the corresponding lens.

In an embodiment, pairs of subject areas from captured images provided by adjacent image pickup devices define overlap portions. In an embodiment, the image processing unit includes a second correcting unit configured to detect a difference between average luminance values of the overlap portions in two subject areas after the brightness values are equalized and to perform a second image correction for at least one of the two subject areas to reduce the difference between the average luminance values.

In an embodiment, the brightness controlling unit is configured to perform automatic gain control processing.

According to a further aspect of the invention for which protection is sought there is provided an image processing system for a vehicle including a plurality of image pickup devices directed to different predetermined areas around the vehicle to provide captured images of the predetermined areas and a display unit, the image processing system comprising means for extracting subject areas from the captured images, wherein the subject areas correspond to partial areas of the predetermined areas that are adjacent to the vehicle, means for equalizing brightness values of the subject areas to provide processed images and means for generating a display image from the processed images.

According to a still further aspect of the invention for which protection is sought there is provided an image processing method for a vehicle including a plurality of image pickup devices directed to different predetermined areas around the vehicle to provide captured images of the predetermined areas and a display unit, the method comprising extracting subject area images of subject areas near the plurality of image pickup devices from captured images provided by the image pickup devices, equalizing brightness values of the subject area images to provide processed images and combining the processed images to generate a composite image.

The method may comprise converting the processed images to a downward view from a virtual view point located above the vehicle before combining the processed images.

The method may comprise correcting a luminance value of each subject area image according to a luminance curve of a lens of a respective image pickup device.

The method may comprise reducing a difference between a luminance value of a portion of each subject area image that corresponds to a lens center portion of a lens of a respective image pickup device and a luminance value of a portion of the subject area image that corresponds to a lens edge portion of the lens of the respective image pickup device.

In an embodiment, the method comprises detecting a difference between average luminance values of overlap portions of a pair of subject area images from captured images provided by adjacent image pickup devices after equalizing brightness values and correcting a luminance value of at least one of the subject area images to reduce the difference between the average luminance values of the overlap portions.

The method may comprise performing automatic gain control processing on the subject area images to provide the processed images.

Embodiments of the invention may provide an image processing system and method for a vehicle including a plurality of image pickup devices directed to different predetermined areas around the vehicle to provide captured images of the predetermined areas and a display unit. One embodiment of the image processing system comprises an extracting unit configured to extract subject areas from the captured images wherein the subject areas correspond to partial areas of the predetermined areas that are adjacent to the image pickup devices, an image processing unit including a brightness controlling unit configured to equalize brightness values of the subject areas to provide processed images and a display image generating unit configured to combine the processed images to generate a display image.

Within the scope of this application it is envisaged that the various aspects, embodiments, examples, features and alternatives set out in the preceding paragraphs, in the claims and/or in the following description and drawings may be taken individually or in any combination thereof.

The present invention will now be described, by way of example only, with reference to the accompanying drawings in which:
FIG. 1 is a block diagram showing a downward image display system to which the invention is applied;
FIG. 2 is an illustration showing the mounting positions and areas captured by four vehicle-mounted cameras;
FIG. 3 is an illustration showing a downward display image displayed on a display;
FIG. 4 is a block diagram of a controller according to one embodiment of the invention;
FIG. 5 is an illustration showing an image portion that is extracted as a display-area image from an entire captured image of the vehicle-mounted camera;
FIG. 6A is an illustration showing the relationship between entire captured images of a front camera and a rear camera with the display-area images of the front and rear cameras;
FIG. 6B is an illustration showing a relationship between entire captured images of a right side camera and a left side camera with the display-area images of the right and left side cameras;
FIG. 7 is an illustration showing a relationship between the variation in luminance values of the display-area image and the with lens characteristics of the vehicle-mounted camera; and
FIG. 8 is a flowchart showing generation of a downward display image by a controller according to an embodiment of the invention.

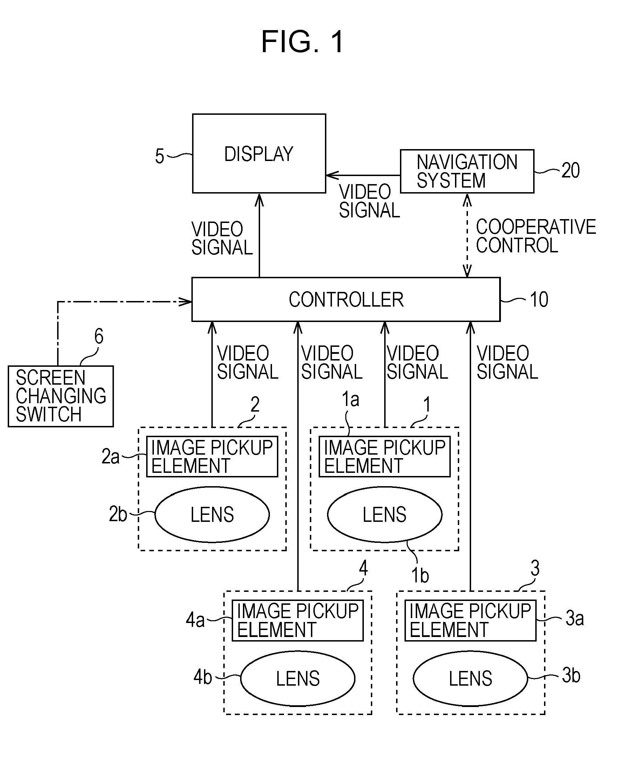

The downward image display system of FIG. 1 includes a controller 10. The input side of the controller 10 is connected to four vehicle-mounted cameras, namely, a front camera 1, a rear camera 2, a right side camera 3 and a left side camera 4. The vehicle-mounted cameras 1-4 include respective image pickup elements 1a, 2a, 3a and 4a, such as CCD sensors or CMOS sensors, as well as respective lenses 1b, 2b, 3b and 4b that are disposed in front of the image pickup elements 1 a, 2a, 3a and 4a. The output side of the controller 10 is connected to a display 5, such as a liquid crystal display unit that is installed in a vehicle cabin. Also, the controller 10 is connected to a screen changing switch 6 to change a display screen of the display 5. The display 5 used in the downward image display system may also be used for another system in the vehicle, such as a navigation system 20. The controller 10 performs cooperative control with a controller of the navigation system 20. The controller 10 allows the above-described downward display image to be displayed on the display 5 if requested through, for example, an operation with the screen changing switch 6.

The controller 10 may be implemented by a microcomputer including a random access memory (RAM), a read-only memory (ROM) and a central processing unit (CPU), in addition to various input and output connections. Generally, the control functions described herein for the processing units of the controller 10 are performed by execution of the CPU of one or more software programs stored in ROM. Of course, some or all of the processing units and their associated functions can be implemented by hardware components.

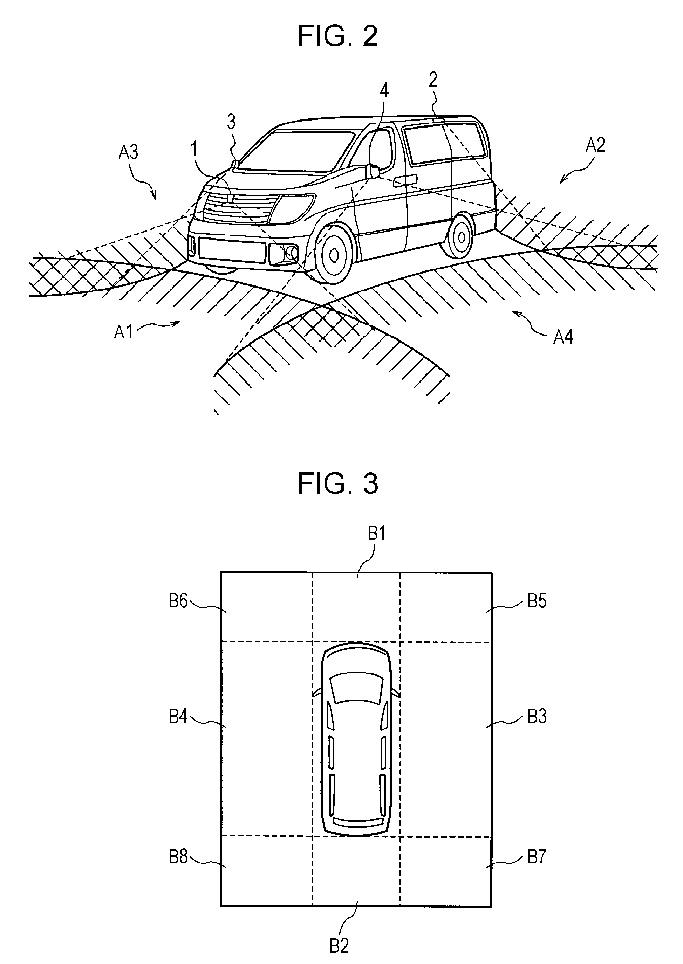

As shown in FIG. 2, the four vehicle-mounted cameras 1-4 are each directed toward a different predetermined area A1-A4. As shown, the front camera 1 is installed at a position near a radiator grill located at a front portion of the vehicle. The front camera 1 captures an image of a predetermined area A1 on the front side of the vehicle at an oblique angle with respect to a road surface. The rear camera 2 is installed at a roof spoiler located at a rear portion of the vehicle. The rear camera 2 captures an image of a predetermined area A2 on the rear side of the vehicle at an oblique angle with respect to the road surface. The right side camera 3 is installed at a side mirror located at a right portion of the vehicle. The right side camera 3 captures an image of a predetermined area A3 on the right side of the vehicle at an oblique angle with respect to the road surface. The left side camera 4 is installed at a side mirror located at a left portion of the vehicle. The left side camera 4 captures an image of a predetermined area A4 on the left side of the vehicle at an oblique angle with respect to the road surface.

The areas A1-A4 captured with the four vehicle-mounted cameras 1-4 have overlap portions where adjacent portion, or areas, of the areas A1-A4 of the vehicle-mounted cameras 1-4 are partially overlapped. In particular, the area A1 captured with the front camera 1 partially overlaps the area A3 captured with the right side camera 3 at a partial area on the front right side of the vehicle. The area A1 captured with the front camera 1 partially overlaps the area A4 captured with the left side camera 4 at a partial area on the front left side of the vehicle. Also, the area A2 captured with the rear camera 2 partially overlaps the area A3 captured with the right side camera 3 at a partial area on the rear right side of the vehicle. The area A2 captured with the rear camera 2 partially overlaps the area A4 captured with the left side camera 4 at a partial area on the rear left side of the vehicle.

Images of the areas A1-A4 captured with the four vehicle-mounted cameras 1-4 are input to the controller 10. The controller 10 uses the captured images of the vehicle-mounted cameras 1-4 generate a downward display image as shown in FIG. 3 and allows the display 5 to display the generated image. The downward display image is an image of the road surface around the vehicle downwardly viewed from above the vehicle. Image portions of the captured images of the vehicle-mounted cameras 1-4 projecting the road surface near the vehicle are converted into downward images downwardly viewed from a virtual view point located above the vehicle, and the converted images are coupled to generate a single continuous image.

In the downward display image in FIG. 3, the captured image of the front camera 1 is used in an image area B1 representing the road surface on the front side of the vehicle, and the captured image of the rear camera 2 is used in an image area B2 representing the road surface on the rear side of the vehicle. Also, the captured image of the right side camera 3 is used in an image area B3 representing the road surface on the right side of the vehicle, and the captured image of the left side camera 4 is used in an image area B4 representing the road surface on the left side of the vehicle. Image areas B5-B8 are areas of the road surface that can be captured respectively with two adjacent vehicle-mounted cameras. One of the captured images of the two vehicle-mounted cameras, or both captured images, are used selectively according to a given rule. In the downward display image shown in FIG. 3, the vehicle displayed at the center of the downward display image is a graphic that is stored in the memory of the controller 10 and is superposed on the downward display image by the controller 10.

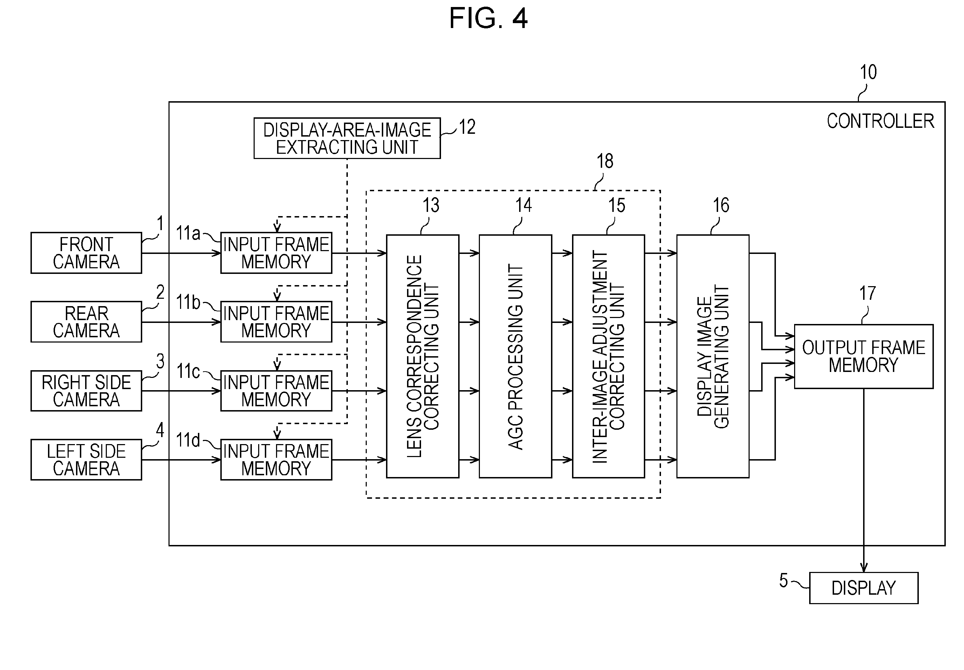

As described above, the downward display image is formed such that view points of the partial images of the images captured with the four vehicle-mounted cameras 1-4 are converted into a downward view point, and the images are coupled. Therefore, if the captured images of the vehicle-mounted cameras 1-4 have various brightness values, continuity of the coupled image may be degraded, and the coupled image may be unsatisfactory. To avoid this, the controller 10 extracts image portions used for a downward display image, that is, image portions of road surface areas near the vehicle, as display-area images from the captured images of the vehicle-mounted cameras 1-4. The extracted display-area images are processed to control the brightness values. Then, the view points of the display-area images are converted, and the display-area images are combined to generate a downward display image. FIG. 4 is a block diagram one embodiment of the controller 10 of FIG. 1. As shown in FIG. 4, the controller 10 includes input frame memories 11a to 11d, a display-area-image extracting unit 12, a lens correspondence correcting unit 13, an AGC processing unit 14, an inter-image adjustment correcting unit 15, a display image generating unit 16 and an output frame memory 17. The lens correspondence correcting unit 13, the AGC processing unit 14 and the inter-image adjustment correcting unit 15 define an image processing unit 18.

In the controller 10, when images of the areas A1-A4 around the vehicle captured with the vehicle-mounted cameras 1-4 are respectively input to the input frame memories 11 a-11 d, the input frame memories 11 a-11 d temporarily store image data of the captured images of the vehicle-mounted cameras 1-4 by frame.

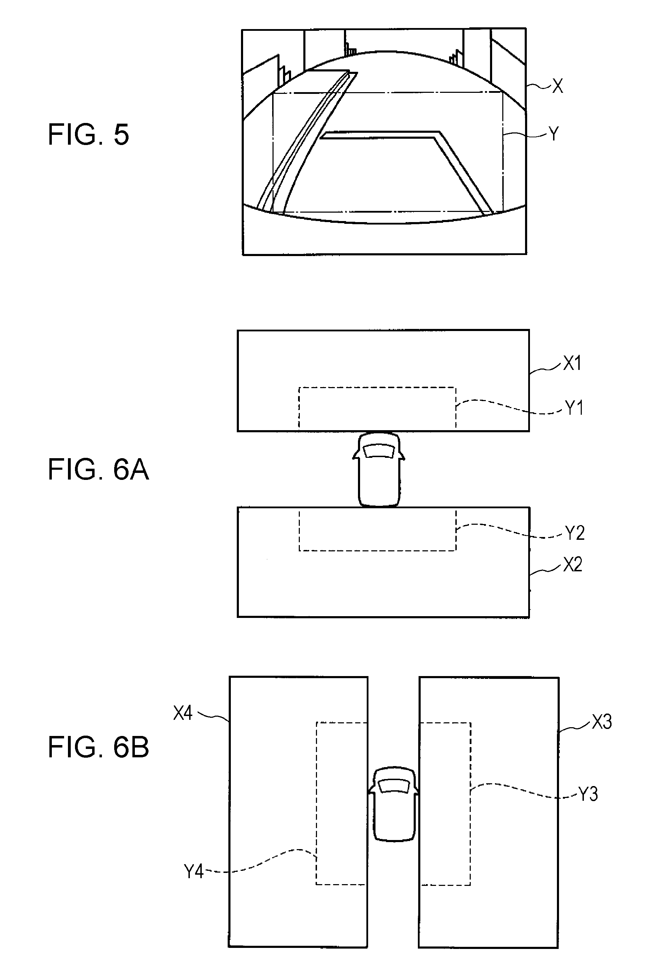

The display-area-image extracting unit 12 outputs instruction signals to the input frame memories 11 a-11 d so as to extract image portions, as display-area images, stored in the input frame memories 11 a-11 d and used for a downward display image respectively from the entire captured images of the vehicle-mounted cameras 1-4. To be more specific, as shown in FIG. 5, the display-area-image extracting unit 12 allows an image portion Y near the corresponding vehicle-mounted camera that has captured the image, that is, the image portion Y projecting the road surface near the vehicle, to be extracted as a display-area image from a captured image X captured with the vehicle-mounted camera.

For simplification, description is given with reference to FIGS. 6A and 6B in which relationships between captured images of the vehicle-mounted cameras and the display-area images are changed to downward images. As shown in FIG. 6A, the display-area-image extracting unit 12 outputs instruction signals such that an image portion Y1 of a partial area near the vehicle is extracted as a display-area image from an entire captured image X1 of the front camera 1, and an image portion Y2 of a partial area near the vehicle is extracted as a display-area image from an entire captured image X2 of the rear camera 2. Also, as shown in FIG. 6B, the display-area-image extracting unit 12 outputs instruction signals such that an image portion Y3 of a partial area near the vehicle is extracted as a display-area image from an entire captured image X3 of the right side camera 3, and an image portion Y4 of a partial area near the vehicle is extracted as a display-area image from an entire captured image X4 of the left side camera 4. It is noted that the portions projecting the road surface near the vehicle in the captured images of the vehicle-mounted cameras 1-4 may vary in accordance with the mounting positions and mounting angles of the vehicle-mounted cameras 1-4. Therefore, experiments are performed in advance to determine a range for projecting the road surface near the vehicle for each of the vehicle-mounted cameras 1-4. Image data of the display-area images extracted according to the instruction signals of the display-area-image extracting unit 12 are read from the input frame memories 11a-11d, and are transmitted to the lens correspondence correcting unit 13.

The lens correspondence correcting unit (first correcting unit) 13 corrects image data of each of the extracted display-area images so as to reduce a difference between a luminance value of an image portion of the display-area image corresponding to a lens edge portion and a luminance value of an image portion corresponding to a lens center portion, in accordance with a luminance curve of the corresponding lens of the vehicle-mounted camera that has captured the display-area image.

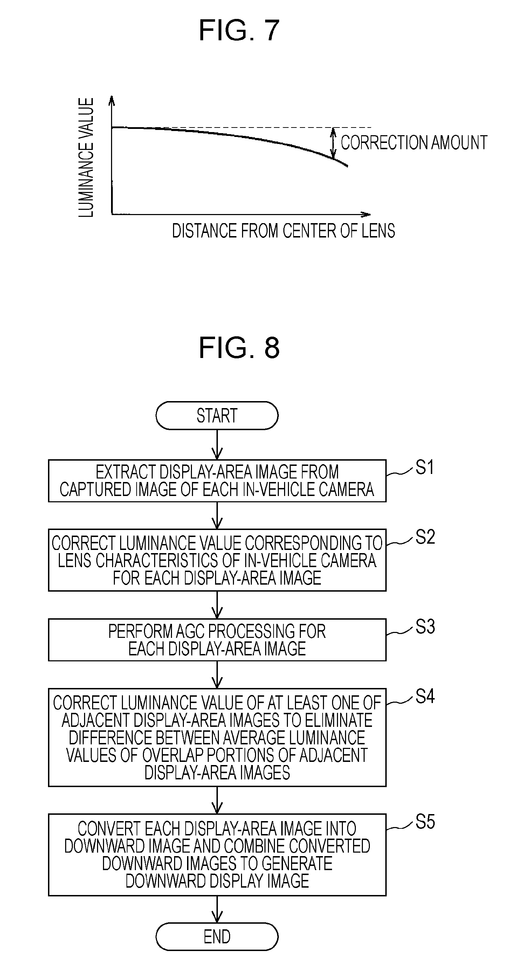

As shown in FIG. 7, the display-area images extracted from the captured images of the vehicle-mounted cameras 1-4 have reduced light quantities at the lens edge portions because of the lens characteristics of the vehicle-mounted cameras 1-4 that have captured the original captured images. Thus, the luminance values of the image portions corresponding to the lens edge portions tend to be smaller than the luminance values of the image portions corresponding to the lens center portions. The lens correspondence correcting unit 13 corrects such a variation in the luminance value of the display-area image corresponding to the lens characteristics for each captured image in accordance with the luminance curve of the lens of each of the vehicle-mounted cameras 1-4. The variation in the luminance values of the display-area images corresponding to the lens characteristics of the vehicle-mounted cameras 1-4 can be measured, for example, through previously-performed experiments or the like. A correction amount for reducing the variation in the luminance values of the display-area image is stored, for example, by creating a map in which a necessary correction amount is associated with a distance of each pixel from the lens center of the display-area image. Thus, the lens correspondence correcting unit 13 can appropriately correct the image data of each display-area image by way of simple processing using the map. The image data of the display-area images with the luminance values corrected by the lens correspondence correcting unit 13 in accordance with the lens characteristics of the vehicle-mounted cameras 1-4 is transmitted to the AGC processing unit 14. If a difference between the luminance values in accordance with the lens characteristics of the vehicle-mounted cameras 1-4 is not found in the image portions thar have been extracted as the display-area images respectively from the captured images of the vehicle-mounted cameras 1-4, the correction of the lens correspondence correcting unit 13 may be omitted.

The AGC processing unit 14 performs automatic gain control (AGC) processing for the display-area images that have been corrected by the lens correspondence correcting unit 13. The AGC processing automatically controls a gain when an input signal is amplified so that an output level of the gain becomes constant. The AGC processing unit 14 equalizes the brightness values of the display-area images through the AGC processing for the display-area images.

Conventionally, AGC processing is performed for the entire captured images by using cameras having an AGC function. However, in-camera AGC processing may influence a background portion in addition to a display-area image that is an image portion projecting the road surface near the vehicle used for generating a downward display image. If a difference in brightness values of background portions in the captured images is noticeable between the captured images of the vehicle-mounted cameras 1-4, a large difference in brightness values may be generated between the display-area images used for generating the downward display image.

In particular, display-area images used for generating a downward display image in the downward image display system of the embodiment are image portions projecting the road surface near the vehicle, the portions being contained in the entire captured images of the vehicle-mounted cameras 1-4. Since the display-area images project a common object, the difference in the brightness values of the captured images may be small. However, background portions other than that image portions may contain various objects and thus have various brightness values such as when the distant sky is projected, or when a building is projected. In many cases, a large difference between the brightness values may be found in the background portions. Owing to this, if the display-area images projecting the road surface are extracted from the captured image on which AGC processing has been performed for the entire captured image, a large difference in brightness values may be generated due to the AGC processing although the display-area images do not have a large difference in brightness values. If the display-area images are simply combined to generate a downward display image, continuity of the downward display image may be significantly degraded.

Therefore, in the downward image display system according to the embodiment, the AGC processing unit 14 is provided in the controller 10, and AGC processing is performed for the image portions extracted as the display-area images from the captured images of the vehicle-mounted cameras 1-4. Accordingly, the brightness values of the display-area images can be equalized while a large difference in brightness values between the display-area images are prevented from being generated, thereby reliably providing continuity of the downward display image. The image data of the display-area images with the AGC processing performed by the AGC processing unit 14 is transmitted to the inter-image adjustment correcting unit 15.

The inter-image adjustment correcting unit (second correcting unit) 15 obtains a difference in average luminance values of overlap portions, where portions of the display-area images of two captured images captured with adjacent vehicle-mounted cameras of the four vehicle-mounted cameras 1-4 are overlapped, and corrects image data of at least one of the two display-area images so as to reduce the difference between the average luminance values.

In particular, the display-area image extracted from the captured image of the front camera 1 and the display-area image extracted from the captured image of the right side camera 3 have overlap portions projecting the road surface on the front right side of the vehicle. The inter-image adjustment correcting unit 15 calculates the average luminance value of the overlap portion projecting the road surface on the front right side of the vehicle in the display-area image, which has been extracted from the captured image of the front camera 1 and has had the correction performed by the lens correspondence correcting unit 13 and the AGC processing performed by the AGC processing unit 14, and calculates the average luminance value of the overlap portion projecting the road surface on the front right side of the vehicle in the display-area image, which has been extracted from the captured image of the right side camera 3 and has had the correction performed by the lens correspondence correcting unit 13 and the AGC processing performed by the AGC processing unit 14. The inter-image adjustment correcting unit 15 obtains a difference between the average luminance values of the overlap portions of the two display-area images. The inter-image adjustment correcting unit 15 corrects image data of at least one of the two display-area images such that the difference is eliminated, that is, the average luminance values of the overlap portions in the two display-area images substantially become equal.

Also, the display-area image extracted from the captured image of the front camera 1 and the display-area image extracted from the captured image of the left side camera 4 have overlap portions projecting the road surface on the front left side of the vehicle. Therefore, the inter-image adjustment correcting unit 15 performs similar processing for the two display-area images and corrects image data of at least one of the two display-area images such that a difference between average luminance values of the overlap portions in the display-area images is eliminated.

Also, the display-area image extracted from the captured image of the rear camera 2 and the display-area image extracted from the captured image of the right side camera 3 have overlap portions projecting the road surface on the rear right side of the vehicle. Therefore, the inter-image adjustment correcting unit 15 performs similar processing for the two display-area images and corrects image data of at least one of the two display-area images such that a difference between average luminance values of the overlap portions in the display-area images is eliminated.

Also, the display-area image extracted from the captured image of the rear camera 2 and the display-area image extracted from the captured image of the left side camera 4 have overlap portions projecting the road surface on the rear left side of the vehicle. Therefore, the inter-image adjustment correcting unit 15 performs similar processing for the two display-area images and corrects image data of at least one of the two display-area images such that a difference between average luminance values of the overlap portions in the display-area images is eliminated.

If a difference in brightness values between adjacent display-area images with the AGC processing performed is substantially negligible, the correction of the inter-image adjustment correcting unit 15 may not be performed between the two display-area images.

Subsequent to processing by the display area image extracting unit 12, the lens correspondence correcting unit 13, the AGC processing unit 14, and the inter-image adjustment correcting unit 15, the display image generating unit 16 converts the display-area images into downward images downwardly viewed from a virtual view point located above the vehicle and combines the converted downward images to generate a single continuous downward display image. Herein, the relationship between the captured images of the vehicle-mounted cameras 1-4 and the downward image is determined uniquely in accordance with the mounting positions, mounting angles and lens characteristics of the vehicle-mounted cameras 1-4. Hence, the processing of converting the display-area images extracted from the captured images of the vehicle-mounted cameras 1-4 into the downward image can be realized merely by converting the coordinates in the memory by utilizing a conversion map or the like.

Image data of the downward display image generated by the display image generating unit 16 is stored in the output frame memory 17 and is output to the display 5 by frame. Accordingly, for example as shown in FIG. 3, the downward display image showing the road surface around the vehicle is downwardly viewed from above the vehicle on the display 5.

FIG. 8 is a flowchart showing processes relating to generation of the downward display image executed by the controller 10 every time when the image data of the captured images of the four vehicle-mounted cameras 1-4 are respectively accumulated in the input frame memories 11 a-11 d of the controller 10 in the downward image display system according to FIG. 1.

When the image data of the captured images of the four vehicle-mounted cameras 1-4 have been respectively accumulated in the input frame memories 11 a-11 d of the controller 10, in step S1 the display-area-image correcting unit 12 outputs instruction signals to the input frame memories 11 a-11 d so as to extract image portions projecting partial areas near the vehicle-mounted cameras 1-4 that have captured the images. That is, image portions projecting the road surface near the vehicle are extracted as display-area images, respectively, from the entire captured images.

In step S2, the lens correspondence correcting unit 13 corrects the image data of the display-area images so as to reduce a difference between a luminance value of an image portion corresponding to a lens end portion of a vehicle-mounted camera and a luminance value of an image portion corresponding to a lens center portion for the display-area images extracted from the captured images of the vehicle-mounted cameras 1-4 in step S1.

In step S3, the AGC processing unit 14 performs AGC processing to equalize brightness values of images for the display-area images corrected in step S2 in accordance with the lens characteristics of the vehicle-mounted camera in step S2.

In step S4, the inter-image adjustment correcting unit 15 corrects the image data of at least one of two adjacent display-area images to eliminate a difference between average luminance values of overlap portions in the two display-area images with the AGC processing performed in step S3.

In step S5, the display image generating unit 16 converts the display-area images into downward images through known view point conversion techniques and combines the display-area images to generate a downward display image to be displayed on the display 5.

In the downward image display system according to the embodiment, the controller 10 repeats the above-described processes of steps S1 to S5 every time when the image data of the captured images of the four vehicle-mounted cameras 1-4 are respectively accumulated in the input frame memories 11a-11d. Accordingly, a satisfactory downward display image without a discontinuity in the entire image can be generated.

As described above, the controller 10 extracts the image portions projecting the road surface near the vehicle and used for generating the downward display image as the display-area images, respectively, from the entire captured images of the vehicle-mounted cameras 1-4 and performs the AGC processing for the display-area images so as to equalize the brightness values of the display images. Accordingly, with the downward image display system, the brightness values of the display-area images can be equalized while a large difference between the brightness values of the display-area images is prevented. Thus, continuity of the downward display image can be reliably provided, and the satisfactory downward display image without discomforting breaks in the entire image can be displayed on the display 5.

In the downward image display system, the controller 10 performs the correction for reducing a difference between the luminance value of the image portion of each of the display-area images corresponding to the lens end portion of the vehicle-mounted camera and the luminance value of the image portion thereof corresponding to the lens center portion before AGC processing is performed for the display-area images extracted from the captured images of the vehicle-mounted cameras 1-4. Accordingly, the satisfactory downward display image without discontinuities can be displayed on the display 5.

In the downward image display system, the controller 10 corrects the image data of at least one of the two display-area images so as to eliminate a difference between average luminance values of the overlap portions in the two display-area images after AGC processing is performed for the display-area images extracted from the captured images of the vehicle-mounted cameras 1-4. Accordingly, a satisfactory downward display image having continuity can be displayed on the display 5.

In the above-described embodiment, while the downward display image is displayed on the display 5, the view point does not have to be converted into a downward image. Similar advantages can be still obtained without the view point conversion. Accordingly, the above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application Serial No. 2007-174208, filed 2nd July 2007, the contents of which are expressly incorporated herein by reference.

## Claims

1. An apparatus for a vehicle having a plurality of image pickup devices directed to different predetermined areas around the vehicle to provide captured images of the predetermined areas and a display unit, the apparatus comprising:
means for extracting subject areas from the captured images, wherein the subject areas correspond to partial areas of the predetermined areas that are adjacent to the vehicle;
means for equalizing brightness values of the subject areas to provide processed images; and
means for generating a display image from the processed images.

2. An apparatus as claimed in claim 1, wherein:
the means for extracting comprises an extracting unit configured to extract subject areas from the captured images wherein the subject areas correspond to partial areas of the predetermined areas that are adjacent to the image pickup devices;
the means for equalizing comprises an image processing unit including a brightness controlling unit configured to equalize brightness values of the subject areas to provide processed images; and
the means for generating a display image comprises a display image generating unit configured to combine the processed images to generate a display image.

3. An apparatus as claimed in claim 2, wherein the display image generating unit is arranged to convert the processed images into downward images corresponding to a downward view from a virtual view point located above the vehicle and to combine the downward images.

4. An apparatus as claimed in claim 2 or claim 3, comprising the plurality of image pickup devices, each of the plurality of image pickup devices having an image pickup element and a lens disposed in front of the image pickup element; and
wherein the image processing unit comprises a first correcting unit arranged to perform a first image correction for each of the subject areas in accordance with a luminance curve of a corresponding lens.

5. An apparatus as claimed in claim 4, wherein the first correcting unit is arranged to reduce a difference between a luminance value of a portion of a subject area that corresponds to a lens center portion of the corresponding lens and a luminance value of a portion of the subject area that corresponds to a lens edge portion of the corresponding lens.

6. An apparatus as claimed in any of claims 2 to 5:
wherein pairs of subject areas from captured images provided by adjacent image pickup devices define overlap portions; and
wherein the image processing unit includes a second correcting unit configured to detect a difference between average luminance values of the overlap portions in two subject areas after the brightness values are equalized and to perform a second image correction for at least one of the two subject areas to reduce the difference between the average luminance values.

7. An apparatus as claimed in any of claims 2 to 6, wherein the brightness controlling unit is arranged to perform automatic gain control processing.

8. A method of image processing for a vehicle having a plurality of image pickup devices directed to different predetermined areas around the vehicle to provide captured images of the predetermined areas and a display unit, the method comprising:
extracting subject area images of subject areas near the plurality of image pickup devices from captured images provided by the image pickup devices;
equalizing brightness values of the subject area images to provide processed images; and
combining the processed images to generate a composite image.

9. A method as claimed in claim 8, comprising converting the processed images to a downward view from a virtual view point located above the vehicle before combining the processed images.

10. A method as claimed in claim 8 or claim 9, comprising correcting a luminance value of each subject area image according to a luminance curve of a lens of a respective image pickup device.

11. A method as claimed in any of claims 8 to 10, comprising reducing a difference between a luminance value of a portion of each subject area image that corresponds to a lens center portion of a lens of a respective image pickup device and a luminance value of a portion of the subject area image that corresponds to a lens edge portion of the lens of the respective image pickup device.

12. A method as claimed in any of claims 8 to 11, comprising:
detecting a difference between average luminance values of overlap portions of a pair of subject area images from captured images provided by adjacent image pickup devices after equalizing brightness values; and
correcting a luminance value of at least one of the subject area images to reduce the difference between the average luminance values of the overlap portions.

13. A method as claimed in any of claims 8 to 12, comprising performing automatic gain control processing on the subject area images to provide the processed images.

14. An imaging system for a vehicle, comprising:
a plurality of image pickup devices directed to different predetermined areas around the vehicle to provide captured images of the predetermined areas;
a display unit; and
and apparatus as claimed in any of claims 1 to 7.

15. A vehicle having an apparatus or a system as claimed in any of claims 1 to 7 or 14.
